# EUROPÄISCHE PATENTANMELDUNG

(11) **EP 4 179 924 A1**
(43) Veröffentlichungstag der Anmeldung: **17.05.2023**
(21) Anmeldenummer: 22204971.0
(22) Anmeldetag: 02.11.2022
(51) Int. Cl.: A47B 88/487, A47B 88/493, A47B 88/60

(54) **VORRICHTUNG ZUR FÜHRUNG EINES BEWEGLICHEN MÖBELTEILS RELATIV ZU EINEM MÖBELKORPUS**

(30) Priorität: 15.11.2021 DE 102021129646
(71) Anmelder: Grass GmbH, 6973 Höchst (AT)
(72) Erfinder: Albrecht, Markus, 6890 Lustenau (AT)
(74) Vertreter: Otten, Roth, Dobler & Partner mbB Patentanwälte

(57) **Zusammenfassung**

Es wird eine Vorrichtung zur Führung eines beweglichen Möbelteils vorgeschlagen, wobei das bewegliche Möbelteil mittels der Vorrichtung verschieblich an einem Möbelkorpus aufnehmbar ist, wobei die Vorrichtung eine Korpusschiene, und eine bewegliche Schiene umfasst, wobei die Korpusschiene am Möbelkorpus anordenbar ist, wobei die verschieblich gelagerte bewegliche Schiene relativ zur Korpusschiene in Öffnung- und Schließrichtung beweglich ist, wobei die Korpusschiene und die bewegliche Schiene jeweils einen ebenen Laufsteg aufweisen, wobei lastübertragende Wälzkörper jeweils zwischen einem Laufsteg der Korpusschiene und einem Laufsteg der beweglichen Schiene angeordnet sind, wobei bei der Relativbewegung zwischen der beweglichen Schiene und Korpusschiene die lastübertragenden Wälzkörper entlang der Laufstege der Korpusschiene und der beweglichen Schiene bewegbar sind. Erfindungsgemäß ist der Laufsteg der Korpusschiene und der Laufsteg der beweglichen Schiene ununterbrochen, wobei die Wälzkörper zwischen der Korpusschiene und der beweglichen Schiene derart ausgestaltet sind, dass im montierten Zustand der Laufsteg der beweglichen Schiene immer schräg relativ zum horizontal ausgerichteten Laufsteg der Korpusschiene ausgerichtet ist.

## Beschreibung

### Stand der Technik

Es sind bereits Vorrichtungen mit Schienen zur Führung eines beweglichen Möbelteils, wie z.B. einer Schublade, bekannt, wobei eine Absenkung des beweglichen Möbelteils im geöffneten Zustand des beweglichen Möbelteils relativ zum Möbelkorpus entgegengewirkt wird.

Dabei werden bei bekannten Vorrichtungen die Ausgestaltung einer Korpusschiene oder einer beweglichen Schiene verändert, beispielsweise durch eine Unterbrechung des Laufsteges der Schienen.

### Aufgabe und Vorteile der Erfindung

Aufgabe der Erfindung ist es, eine verbesserte Vorrichtung zur Führung eines beweglichen Möbelteils relativ zu einem Möbelkorpus bereitzustellen, insbesondere im Hinblick auf eine kompakte und einfache Bauweise.

Die Aufgabe wird durch die Merkmale der unabhängigen Ansprüche gelöst.

Vorteilhafte und zweckmäßige Ausführungsformen, Varianten und Weiterbildungen der Erfindung sind in den abhängigen Ansprüchen ausgeführt.

Die Erfindung geht aus von einer Vorrichtung zur Führung eines beweglichen Möbelteils, insbesondere eine Schublade, wobei das bewegliche Möbelteil mittels der Vorrichtung verschieblich an einem Möbelkorpus aufnehmbar ist, wobei die Vorrichtung eine Korpusschiene, und eine bewegliche Schiene umfasst, wobei die Korpusschiene am Möbelkorpus anordenbar ist, wobei die verschieblich gelagerte bewegliche Schiene relativ zur Korpusschiene in Öffnung- und Schließrichtung beweglich ist, wobei die Korpusschiene und die bewegliche Schiene jeweils einen ebenen Laufsteg aufweisen, wobei lastübertragende Wälzkörper jeweils zwischen einem Laufsteg der Korpusschiene und einem Laufsteg der beweglichen Schiene angeordnet sind, wobei bei der Relativbewegung zwischen der beweglichen Schiene und der Korpusschiene die lastübertragenden Wälzkörper entlang der Laufstege der Korpusschiene und der beweglichen Schiene bewegbar sind.

Bevorzugterweise handelt es sich bei der Vorrichtung um eine Schubladenausziehführung, insbesondere z.B. um einen Teil- oder Vollauszug. Dabei ist vorzugsweise bei einem Teilauszug nur genau eine bewegliche Schiene zusätzlich zur Korpusschiene vorhanden. Bei einem Vollauszug sind vorzugsweise genau zwei bewegliche Schienen vorhanden, wie z.B. eine Mittelschiene und eine Schubladenschiene. Beim Bewegen des beweglichen Möbelteils in Öffnungs- und Schließrichtung kann die bewegliche Schiene bzw. können die beweglichen Schienen relativ zur Korpusschiene bewegt werden. Weiter kann bei der Öffnungs- und Schließbewegung des beweglichen Möbelteils vorzugsweise auch eine erste bewegliche Schiene, wie z.B. eine Mittelschiene, relativ zur einer zweiten beweglichen Schiene, wie z.B. eine Schubladenschiene, bewegt werden.

Das Möbel weist vorzugsweise für jedes bewegliche Möbelteil zwei gleiche Vorrichtungen auf, wobei bevorzugterweise jeweils eine Vorrichtung an z.B. einer Seitenwand des Möbelkorpus angeordnet ist. Bevorzugterweise ist die Korpusschiene im montierten Zustand an dem Möbelkorpus befestigt. Die bewegliche Schiene, wie z.B. die Schubladenschiene, ist vorzugsweise mit dem beweglichen Möbelteil verbunden, wobei die bewegliche Schiene beispielsweise in einem Innenraum einer Seitenzarge eines beweglichen Möbelteils aufgenommen ist oder unterhalb eines Bodens und/oder Seitenwand des beweglichen Möbelteils angeordnet ist. Vorteilhafterweise ist die bewegliche Schiene zusammen mit dem beweglichen Möbelteil relativ zur der beispielsweise positionsfest an einer Seitenwand des Möbelkorpus angeordneten Korpusschiene linear beweglich, wobei die bewegliche Schiene relativ zur Korpusschiene in Öffnungs- und Schließrichtung bewegt werden kann.

Die Korpusschiene kann vorzugsweise genau einen Laufsteg oder genau zwei Laufstege aufweisen. Die Laufstege der Korpusschiene sind vorzugsweise im montierten Zustand der Vorrichtung horizontal ausgerichtet. Dabei weist der Laufsteg vorzugsweise zwei Flächen auf, wobei die obere und untere Fläche vorzugsweise gegenüberliegend an dem Laufsteg angeordnet und durch die Materialdicke des Laufstegs voneinander getrennt sind. Werden lastübertragende Wälzkörper entlang der Fläche des Laufstegs bewegt, werden diese Flächen auch Laufflächen genannt. Weist die Korpusschiene einen einzigen Laufsteg auf, weist dieser Laufsteg vorzugsweise zwei Laufflächen auf. Weist die Korpusschiene zwei Laufstege auf, weist vorzugsweise jeder Laufsteg nur eine Lauffläche auf.

Auch die bewegliche Schiene kann vorzugsweise einen einzigen Laufsteg oder zwei Laufstege aufweisen, wobei bei einem einzigen Laufsteg dieser Laufsteg vorzugsweise zwei Laufflächen aufweist. Bei zwei Laufstegen weist vorzugsweise jeder Laufsteg nur eine Lauffläche oder zwei Lauffläche auf. Dabei sind die Laufflächen der beweglichen Schiene z.B. eben ausgestaltet.

Die lastübertragenden Wälzkörper sind vorzugsweise entlang der Laufflächen der Laufstege der Schienen in Öffnungs- und Schließrichtung bewegbar. Bei der Öffnungs- und Schließbewegung des beweglichen Möbelteils werden die Wälzkörper entlang des horizontal ausgerichteten Laufstegs der am Möbelkorpus montierten Korpusschiene bewegt, wobei die bewegliche Schiene relativ zur Korpusschiene bewegt wird.

Der Kern der Erfindung ist, dass der Laufsteg der Korpusschiene und der Laufsteg der beweglichen Schiene ununterbrochen ist, wobei die Wälzkörper zwischen der Korpusschiene und der beweglichen Schiene derart ausgestaltet sind, dass im montierten Zustand der Laufsteg der beweglichen Schiene immer schräg relativ zum horizontal ausgerichteten Laufsteg der Korpusschiene ausgerichtet ist.

Vorteilhafterweise sind die Laufstege bzw. die Laufflächen der Korpusschiene und beweglichen Schiene ununterbrochen bzw. nicht unterbrochen ausgebildet. Das bedeutet beispielsweise, dass im Laufsteg bzw. der Lauffläche keine Lücke oder Spalt oder eine Kontur, die sich von den ebenen Laufflächen unterscheidet, vorhanden sind. Dies hat den Vorteil, dass die Wälzkörper entlang der kompletten Laufflächen der Korpusschiene und beweglichen Schiene bewegbar sind und dass ein ruhiges Laufverhalten der beweglichen Schiene bzw. der beweglichen Schienen in Öffnungs- und Schließrichtung gewährt ist.

Bevorzugterweise wird bei der Öffnungs- und Schließbewegung des beweglichen Möbelteils die Schrägstellung des Laufstegs der beweglichen Schiene nicht verändert. Vorteilhafterweise sind die Wälzkörper, welche zwischen dem Laufsteg der Korpusschiene und dem Laufsteg der beweglichen Schiene angeordnet sind, derart ausgestaltet, dass die Bewegung der beweglichen Schiene in Öffnungs- und Schließrichtung die Ausrichtung der beweglichen Schiene nicht verändert, außer das bewegliche Möbelteil wirkt mit einer Kraft bzw. einem Gewicht auf die beweglichen Schienen im geöffneten Zustand des beweglichen Möbelteils.

Durch die Schrägstellung des Laufstegs bzw. der Laufstege der beweglichen Schiene, insbesondere im geöffneten Zustand des beweglichen Möbelteils bzw. im ausgezogenen Zustand der beweglichen Schiene, kann vorteilhafterweise eine Absenkung des beweglichen Möbelteils, insbesondere eines voll beladenen beweglichen Möbelteils, ausgeglichen werden. Denn bei standardmäßigen Vorrichtungen zum Führen eines beweglichen Möbelteils wird das bewegliche Möbelteil bzw. die Schubladenschiene im geöffneten Zustand durch das Gewicht des beweglichen Möbelteils bzw. des Inhalts des beweglichen Möbelteils, nach unten in Richtung Korpusschiene bzw. schräg zu einer horizontalen ausgelenkt.

Bei der erfindungsgemäßen Vorrichtung wird durch die schräge Ausrichtung der Laufstege der beweglichen Schiene durch das Gewicht des beweglichen Möbelteils die Laufstege bzw. Laufflächen der beweglichen Schiene von einer Schrägstellung in eine annähernd horizontale Lage gedrückt bzw. ausgelenkt. Dadurch kann vorteilhaft im Gegensatz zu den standardmäßigen Vorrichtungen das bewegliche Möbelteil, insbesondere ein schweres bewegliches Möbelteil, ohne großen Kraftaufwand geschlossen werden. Das Maß der Schrägstellung der beweglichen Schiene ist vorzugsweise auf ein Maß eines zu erwarteten Gewichts des beweglichen Möbelteils abgestimmt, so dass eine annähernd horizontale Stellung des beweglichen Möbelteils in geöffneter Stellung erreicht wird.

Von Vorteil ist, dass ein Wälzkörperwagen Wälzkörperreihen mit jeweils mehreren Wälzkörpern aufweist.

Vorzugsweise sind die Wälzkörper einer Wälzkörperreihe gleich ausgestaltet bzw. weisen eine gleiche bzw. untereinander identische Außenkontur und Material auf.

Die Anzahl der Wälzkörper in einer Wälzköperreihe kann für unterschiedliche Wälzkörperreihen variieren. Beispielsweise kann eine Wälzkörperreihe genau zwei, genau drei, genau vier usw. Wälzkörper aufweisen und eine andere Wälzkörperreihe genau zwei, genau drei, genau vier, genau fünf usw. Wälzkörper aufweisen. In den Wälzkörperreihen sind vorzugsweise mindestens zwei Wälzkörper angeordnet. Vorstellbar sind auch Wälzkörperreihen mit genau drei, genau vier, genau fünf, genau sechs, genau sieben, genau acht, genau neun, genau zehn usw. Wälzkörpern.

Ebenfalls von Vorteil ist, dass der Durchmesser aller Wälzkörper einer Wälzkörperreihe gleich ist.

Bevorzugterweise sind die Wälzkörper zylindrisch ausgestaltet, wobei vorzugsweise der Durchmesser, insbesondere der Durchmesser der Grundfläche des Zylinders, der Wälzkörper einer Wälzkörperreihe gleich ist. Weiter können die Wälzkörper auch als Kugeln ausgestaltet sein, auch bei kugelförmigen Wälzkörpern ist vorzugsweise der Durchmesser der Wälzkörper einer Wälzkörperreihe gleich.

Weiter ist vorstellbar, dass die Durchmesser der Wälzkörper in einer Wälzkörperreihe sich unterscheiden, beispielsweise können die Durchmesser der Wälzkörper der Wälzkörperreihe in Öffnungsrichtung zunehmen oder abnehmen.

Ebenfalls ist von Vorteil, dass ein einziger Wälzkörperwagen mit vier Wälzköperreihen vorhanden ist, wobei zwei Wälzkörperreihen zwischen dem Laufsteg der Korpusschiene und einem oberen Laufsteg der beweglichen Schiene und zwei Wälzkörperreihen zwischen dem Laufsteg der Korpusschiene und einem unteren Laufsteg der beweglichen Schiene vorhanden sind.

Bevorzugterweise weist die bewegliche Schiene genau zwei Laufstege auf. Dabei ist vorzugsweise im montierten Zustand der Vorrichtung der horizontal ausgerichtete Laufsteg der Korpusschiene zwischen den zwei Laufstegen der beweglichen Schiene angeordnet. Bevorzugterweise sind jeweils Wälzkörper der Wälzkörperreihe zwischen den Laufstegen der beweglichen Schiene und dem Laufsteg der Korpusschiene angeordnet, so dass an dem genau einem Laufsteg der Korpusschiene an einer oberen Lauffläche und unteren Lauffläche Wälzkörper entlang bewegt werden, wobei die Laufflächen der Korpusschiene durch die Dicke des Laufstegs voneinander beabstandet sind. Bei der beweglichen Schiene sind vorzugsweise an dem oberhalb des Laufstegs der Korpusschiene befindlichen oberen Laufsteg der beweglichen Schiene nur Wälzkörper der Wälzkörperreihe entlang der unteren Lauffläche, welche zum Laufsteg der Korpusschiene ausgerichtet ist und an den unterhalb des Laufstegs der Korpusschiene befindlichen unteren Laufsteg der beweglichen Schiene nur Wälzkörper der Wälzkörperreihen entlang der oberen Lauffläche, welche zum Laufsteg der Korpusschiene ausgerichtet ist, entlang bewegbar.

Vorzugsweise sind zwischen der oberen Laufläche des Laufstegs der Korpusschiene und der unteren Lauffläche des oberen Laufstegs der beweglichen Schiene genau zwei Wälzkörperreihen angeordnet. Die Wälzkörper der beiden Wälzkörperreihen, welche zwischen den oberen Laufsteg der beweglichen Schiene und dem Laufsteg der Mittelschiene angeordnet sind, weisen bevorzugterweise einen Durchmesser von 4,5 bis 6,5 mm auf. Weiter ist bevorzugt, dass zwischen der unteren Lauffläche des Laufstegs der Korpusschiene und der oberen Lauffläche des unteren Laufstegs der beweglichen Schiene genau zwei Wälzkörperreihen angeordnet sind. Die Wälzkörper der beiden Wälzkörperreihen, welche zwischen den unteren Laufsteg der beweglichen Schiene und dem Laufsteg der Mittelschiene angeordnet sind, weisen bevorzugterweise einen Durchmesser von 6,2 bis 7,7 mm auf.

Bevorzugterweise sind die Wälzkörper der Wälzkörperreihen, welche zwischen dem Laufsteg der Korpusschiene und den Laufstegen der beweglichen Schiene angeordnet sind an einem Wälzkörperwagen angeordnet, so dass alle Wälzkörper gleichzeitig in Öffnungs- oder Schließrichtung entlang der Laufflächen der Laufstege der beweglichen Schiene und Korpusschiene bewegt werden.

Auch ist es vorteilhaft, dass ein einziger Wälzkörperwagen mit vier Wälzköperreihen vorhanden ist, wobei zwei Wälzkörperreihen zwischen dem Laufsteg der beweglichen Schiene und einem oberen Laufstegs der Korpusschiene und zwei Wälzkörperreihen zwischen dem Laufsteg der beweglichen Schiene und einem unteren Laufsteg der Korpusschiene vorhanden sind.

Bevorzugterweise weist die Korpusschiene genau zwei Laufstege auf. Dabei ist vorzugsweise im montierten Zustand der Vorrichtung der Laufsteg der beweglichen Schiene zwischen den zwei horizontal ausgerichteten Laufstegen der Korpusschiene angeordnet. Bevorzugterweise sind jeweils Wälzkörper der Wälzkörperreihe zwischen den Laufstegen der Korpusschiene und dem Laufsteg der beweglichen Schiene angeordnet, so dass an dem Laufsteg der beweglichen Schiene an einer oberen Lauffläche und unteren Lauffläche Wälzkörper entlang bewegt werden, wobei die Laufflächen durch die Dicke des Laufstegs voneinander beabstandet sind. Bei der Korpusschiene sind vorzugsweise an dem oberhalb des Laufstegs der beweglichen Schiene befindlichen oberen Laufsteg der Korpusschiene nur Wälzkörper der Wälzkörperreihe entlang der unteren Lauffläche, welche zum Laufsteg der beweglichen Schiene ausgerichtet ist und an den unterhalb des Laufstegs der beweglichen Schiene befindlichen unteren Laufsteg der Korpusschiene nur Wälzkörper der Wälzkörperreihen entlang der oberen Lauffläche, welche zum Laufsteg der beweglichen Schiene ausgerichtet ist, entlang bewegbar.

Vorzugsweise sind zwischen der oberen Laufläche des Laufstegs der beweglichen Schiene und der unteren Lauffläche des oberen Laufstegs der Korpusschiene genau zwei Wälzkörperreihen angeordnet. Weiter ist bevorzugt, wenn zwischen der unteren Lauffläche des Laufstegs der beweglichen Schiene und der oberen Lauffläche des unteren Laufstegs der Korpusschiene genau zwei Wälzkörperreihen angeordnet sind.

Bevorzugterweise sind die Wälzkörper der Wälzkörperreihen, welche zwischen dem Laufsteg der beweglichen Schiene und den Laufstegen der Korpusschiene angeordnet sind an einem Wälzkörperwagen angeordnet, so dass alle Wälzkörper gleichzeitig in Öffnungs- oder Schließrichtung entlang der Laufflächen des Laufstegs der beweglichen Schiene und den Laufstegen der Korpusschiene bewegt werden.

Vorteilhafterweise sind zwei Wälzkörperwagen mit jeweils zwei Wälzkörperreihen vorhanden.

Bevorzugterweise sind die beiden Wälzkörperwagen im montieren Zustand der Vorrichtung voneinander beabstandet, insbesondere horizontal voneinander beabstandet.

Bevorzugterweise ist die Bewegung der beiden Wälzkörperwagen in Öffnungs- und Schließrichtung synchronisiert. Dafür können die beiden Wälzkörperwagen beispielsweise über eine Synchronstange miteinander verbunden sein.

Ist der genau eine Laufsteg der Korpusschiene zwischen den genau zwei Laufstegen der beweglichen Schiene angeordnet, ist vorteilhafterweise jeweils bei einem Wälzkörperwagen eine Wälzkörperreihe zwischen oberen Lauffläche des Laufstegs der Korpusschiene und der unteren Lauffläche des oberen Laufstegs der beweglichen Schiene und eine Wälzkörperreihe zwischen unteren Lauffläche des Laufstegs der Korpusschiene und der oberen Lauffläche des unteren Laufstegs der beweglichen Schiene vorhanden.

Ist der genau eine Laufsteg der beweglichen Schiene zwischen den genau zwei Laufstegen der Korpusschiene angeordnet, ist jeweils bei einem Wälzkörperwagen eine Wälzkörperreihe zwischen der oberen Lauffläche des Laufstegs der beweglichen Schiene und der unteren Lauffläche des oberen Laufstegs der Korpusschiene und eine Wälzkörperreihe zwischen der unteren Lauffläche des Laufstegs der beweglichen Schiene und der oberen Lauffläche des unteren Laufstegs der Korpusschiene vorhanden.

Es ist vorteilhaft, dass die Wälzkörper zweier Wälzkörperreihen jeweils unterschiedliche Durchmesser aufweisen, wobei eine Wälzkörperreihe zwischen dem Laufsteg der Korpusschiene und dem oberen Laufsteg der beweglichen Schiene und eine Wälzkörperreihe zwischen dem Laufsteg der Korpusschiene und dem unteren Laufsteg der beweglichen Schiene angeordnet sind.

Bevorzugterweise sind genau zwei Wälzkörperreihen in Öffnungsrichtung vorne am Wälzkörperwagen angeordnet, wobei die Wälzkörper der Wälzkörperreihe, welche zwischen dem oberen Laufsteg der beweglichen Schiene und dem Laufsteg der Korpusschiene angeordnet sind, einen größeren Durchmesser aufweisen, als die Wälzkörper einer Wälzkörperreihe, welche zwischen dem unteren Laufsteg der beweglichen Schiene und dem Laufsteg der Korpusschiene angeordnet sind. Dabei liegt vorzugsweise der Unterschied in den Durchmessern bei 0,4 mm bis 0,95 mm.

Bei den beiden Wälzkörperreihen, welche in Öffnungsrichtung hinten am Wälzkörperwagen angeordnet sind, weisen die Wälzkörper der Wälzkörperreihe, welche zwischen dem oberen Laufsteg der beweglichen Schiene und dem Laufsteg der Korpusschiene angeordnet sind einen kleineren Durchmesser auf, als die Wälzkörper einer Wälzkörperreihe, welche zwischen dem unteren Laufsteg der beweglichen Schiene und dem Laufsteg der Korpusschiene angeordnet sind. Dabei liegt vorzugsweise der Unterschied in den Durchmessern bei 1 mm bis 2,5 mm.

Es ist vorteilhaft, dass die Wälzkörper zweier Wälzkörperreihen jeweils unterschiedliche Durchmesser aufweisen, wobei eine Wälzkörperreihe zwischen dem Laufsteg der beweglichen Schiene und dem oberen Laufsteg der Korpusschiene und eine Wälzkörperreihe zwischen dem Laufsteg der beweglichen Schiene und dem unteren Laufsteg der Korpusschiene angeordnet sind.

Bevorzugterweise sind genau zwei Wälzkörperreihen in Öffnungsrichtung vorne am Wälzkörperwagen angeordnet, wobei die Wälzkörper der Wälzkörperreihe, welche zwischen dem oberen Laufsteg der Korpusschiene und dem Laufsteg der beweglichen Schiene angeordnet sind, einen kleineren Durchmesser aufweisen, als die Wälzkörper einer Wälzkörperreihe, welche zwischen dem unteren Laufsteg der Korpusschiene und dem Laufsteg der beweglichen Schiene angeordnet sind.

Bei den beiden Wälzkörperreihen, welche in Öffnungsrichtung hinten am Wälzkörperwagen angeordnet sind, weisen die Wälzkörper der Wälzkörperreihe, welche zwischen dem oberen Laufsteg der Korpusschiene und dem Laufsteg der beweglichen Schiene angeordnet sind einen größeren Durchmesser auf, als die Wälzkörper einer Wälzkörperreihe, welche zwischen dem unteren Laufsteg der Korpusschiene und dem Laufsteg der beweglichen Schiene angeordnet sind.

Auch ist es vorteilhaft, dass der Durchmesser der Wälzkörper der in Öffnungsrichtung vorderen Wälzkörperreihe unterschiedlich zu dem Durchmesser der Wälzkörper der hinteren Wälzköperreichen ist.

Bei der Ausgestaltung, bei welcher der genau eine Laufsteg der Korpusschiene zwischen genau zwei Laufstegen der beweglichen Schiene angeordnet ist, ist vorzugsweise der Durchmesser der Wälzkörper der in Öffnungsrichtung vorderen Wälzkörperreihe kleiner als der hinteren Wälzkörperreihe, bei den Wälzkörperreihen, die zwischen dem Laufsteg der Korpusschiene und der Lauffläche des unteren Laufstegs der beweglichen Schiene angeordnet sind. Dabei liegt vorzugsweise der Unterschied in den Durchmessern bei 0,5 mm bis 0,95 mm. Weiter ist vorteilhafterweise der Durchmesser der Wälzkörper der in Öffnungsrichtung vorderen Wälzkörperreihe größer als der hinteren Wälzkörperreihe, bei den Wälzkörperreihen, die zwischen dem Laufsteg der Korpusschiene und der Lauffläche des oberen Laufstegs der beweglichen Schiene angeordnet sind. Auch hier ist vorzugsweise der Unterschied in den Durchmessern bei 0,4 mm bis 0,95 mm. Beispielsweis ist der Unterschied in den Durchmessern der in Öffnungsrichtung vorderen Wälzkörper der Wälzkörperreihe zu den hinteren Wälzkörpern der Wälzkörperreihe, bei den Wälzkörpern die zwischen dem Laufsteg der Korpusschiene und einem Laufsteg der beweglichen Schiene angeordnet sind, gleich.

Bei der Ausgestaltung, bei welcher der genau eine Laufsteg der beweglichen Schiene zwischen genau zwei Laufstegen der Korpusschiene angeordnet ist, ist der Durchmesser der Wälzkörper der in Öffnungsrichtung vorderen Wälzkörperreihe größer als der hinteren Wälzkörperreihe, bei den Wälzkörperreihen, die zwischen dem Laufsteg der beweglichen Schiene und der Lauffläche des unteren Laufstegs der Korpusschiene angeordnet sind. Weiter ist vorteilhafterweise der Durchmesser der Wälzkörper der in Öffnungsrichtung vorderen Wälzkörperreihe kleiner als der hinteren Wälzkörperreihe, bei den Wälzkörperreihen, die zwischen dem Laufsteg der beweglichen Schiene und der Lauffläche des oberen Laufstegs der Korpusschiene angeordnet sind.

Von Vorteil ist, dass die Summe der Durchmesser der Wälzkörper der beiden in Öffnungsrichtung vorderen Wälzkörperreihen gleich ist mit der Summe der Durchmesser der Wälzkörper der beiden hintern Wälzkörperreihen.

Dadurch ist vorteilhafterweise gewährleistet, dass die Schrägstellung der beiden Laufstege der beweglichen Schiene gleich ist, wenn der Laufsteg der Korpusschiene zwischen zwei Laufstegen der beweglichen Schiene angeordnet ist. Denn vorzugsweise ist der Unterschied der Durchmesser in Öffnungsrichtung vorderen Wälzkörper der Wälzkörperreihe zu dem hinteren Wälzkörper der Wälzkörperreihe, welche zwischen dem oberen Laufsteg der beweglichen Schiene und dem Laufsteg der Korpusschiene angeordnet sind gleich zum Unterschied der Durchmesser in Öffnungsrichtung vorderen Wälzkörper der Wälzkörperreihe zu dem hinteren Wälzkörper einer Wälzkörperreihe, welche zwischen dem unteren Laufsteg der beweglichen Schiene und dem Laufsteg der Korpusschiene angeordnet sind.

Bei der Variante, bei welcher der Laufsteg der beweglichen Schiene zwischen zwei Laufstegen der Korpusschiene angeordnet ist, wird dadurch das die Summe der Durchmesser der Wälzkörper der beiden vorderen Wälzkörperreihen in Öffnungsrichtung gleich ist mit der Summe der Durchmesser der Wälzkörper der beiden hintern Wälzkörperreihen erreicht, dass vorteilhafterweise nur der Laufsteg bzw. die Laufstege der beweglichen Schiene schräg ausgerichtet werden und die Laufstege der Korpusschiene horizontal ausgerichtet bleiben.

Beispielsweise ist der Durchmesser der in Öffnungsrichtung vorderen Wälzkörper der Wälzkörperreihen, welche zwischen den Laufsteg der Korpusschiene und dem oberen Laufsteg der beweglichen Schiene angeordnet sind unterschiedlich zu den anderen Wälzkörpern der anderen Wälzkörperreihen. Bevorzugterweise weisen die Wälzkörper der unterschiedlichen Wälzkörperreihen jeweils unterschiedlich Durchmesser zueinander auf.

Auch ist es vorteilhaft, dass die bewegliche Schiene eine Schubladenschiene ist.

Ebenfalls von Vorteil ist, dass die bewegliche Schiene eine Mittelschiene ist.

Vorteilhafterweise weist die Vorrichtung zwei bewegliche Schienen auf, wobei eine erste bewegliche Schiene als Mittelschiene und eine zweite bewegliche Schiene als Schubladenschiene ausgebildet ist.

Bevorzugterweise ist die Vorrichtung bzw. die Schubladenausziehführung als Vollauszug ausgestaltet, wobei vorzugsweise die Mittelschiene zwischen der Korpusschiene und Schubladenschiene angeordnet ist. Vorzugsweise ist die Mittelschiene und Schubladenschiene relativ zur Korpusschiene bewegbar und die Schubladenschiene relativ zur Mittelschiene bewegbar.

Von Vorteil ist, dass zwischen einem Laufsteg der Schubladenschiene und einem Laufsteg der Mittelschiene zwei Wälzkörperreihen angeordnet sind, wobei die Wälzkörper einer Wälzkörperreihe einen anderen Durchmesser aufweisen als die Wälzkörper der anderen Wälzkörperreihe.

Bevorzugterweise ist bei einer Variante der Erfindung der genau eine Laufsteg der Korpusschiene zwischen genau zwei Laufstegen der Mittelschiene angeordnet, wobei oberhalb des oberen Laufstegs der Mittelschien vorzugsweise genau ein Laufsteg der Schubladenschiene angeordnet ist. Weiter ist bevorzugt, dass zwischen dem oberen Laufsteg der Mittelschiene und dem Laufsteg der Schubladenschiene zwei Wälzkörperreihen angeordnet sind. Die Wälzkörper der zwei Wälzkörperreihen weisen vorzugsweise einen Durchmesser von 3,5 bis 4,5 mm auf. Dabei sind vorteilhafterweise die Durchmesser der Wälzkörper der in Öffnungsrichtung vorderen Wälzkörperreihe größer als der hinteren Wälzkörperreihen. Dabei liegt vorzugsweise der Unterschied in den Durchmessern bei 0,1 mm bis 0,3 mm. Die Wälzkörper einer Wälzkörperreihe weisen vorzugsweise die gleichen Durchmesser auf. Somit kann vorteilhafterweise erreicht werden, dass der Laufsteg der Schubladenschiene schräg relativ zum Laufsteg bzw. zu den Laufstegen der Mittelschiene ausgerichtet ist, wobei die Laufstege der Mittelschiene schon schräg relativ zu dem horizontal ausgerichteten Laufsteg der Korpusschiene ausgerichtet sind. Bevorzugterweise wird der Laufsteg der Schubladenschiene dadurch weiter schräg nach oben ausgerichtet.

Bei einer weiteren Variante ist vorzugsweise ein unterer Laufsteg der Mittelschiene zwischen genau zwei Laufstegen der Korpusschiene und ein oberer Laufsteg der Mittelschiene zwischen genau zwei Laufstegen der Schubladenschiene angeordnet. Bevorzugterweise sind zwei Wälzkörperreihen zwischen einem unteren Laufsteg der Schubladenschiene und dem oberen Laufsteg der Mittelschiene und zwei Wälzkörperreihen zwischen einem oberen Laufsteg der Schubladenschiene und dem oberen Laufsteg der Mittelschiene angeordnet.

Die Wälzkörper einer Wälzkörperreihe weisen vorzugsweise die gleichen Durchmesser auf. Bevorzugterweise weisen die Wälzkörper der Wälzkörperreihe, welche zwischen dem oberen Laufsteg der Schubladenschiene und dem oberen Laufsteg der Mittelschiene angeordnet sind, einen größeren Durchmesser auf, als die Wälzkörper einer Wälzkörperreihe, welche zwischen dem unteren Laufsteg der Schubladenschiene und dem oberen Laufsteg der Mittelschiene angeordnet sind. Bei den beiden Wälzkörperreihen, welche in Öffnungsrichtung hinten am Wälzkörperwagen angeordnet sind, weisen die Wälzkörper der Wälzkörperreihe, welche zwischen dem oberen Laufsteg der Schubladenschien und dem oberen Laufsteg der Mittelschiene angeordnet sind einen kleineren Durchmesser auf, als die Wälzkörper einer Wälzkörperreihe, welche zwischen dem unteren Laufsteg der Schubladenschiene und dem oberen Laufsteg der Mittelschiene angeordnet sind.

Außerdem ist vorzugsweise der Durchmesser der Wälzkörper der in Öffnungsrichtung vorderen Wälzkörperreihe kleiner als der hinteren Wälzkörperreihe, bei den Wälzkörperreihen, die zwischen dem oberen Laufsteg der Mittelschiene und dem unteren Laufsteg der Schubladenschiene angeordnet sind. Weiter ist vorteilhafterweise der Durchmesser der Wälzkörper der in Öffnungsrichtung vorderen Wälzkörperreihe größer als der hinteren Wälzkörperreihe, bei den Wälzkörperreihen, die zwischen dem oberen Laufsteg der Mittelschiene und dem oberen Laufsteg der Schubladenschiene angeordnet sind.

Eine vorteilhafte Ausführungsform der Erfindung ist ein Möbel mit einem beweglichen Möbelteil und einen Möbelkorpus, wobei das bewegliche Möbelteil relativ zum Möbelkorpus geführt in Öffnungs- und Schließrichtung durch eine Vorrichtung nach einer der vorangegangen beschriebenen Ausführungen bewegbar ist.

Beispielsweise ist bei dem Möbel das bewegliche Möbelteil als Schublade ausgebildet. Bevorzugterweise weist das Möbel beispielsweise mehrere Schubladen auf, wobei an jede Schublade vorzugsweise eine bzw. zwei Vorrichtungen nach einem der vorangegangen beschriebenen Ausführungen angeordnet ist, so dass die Schubladen durch die Vorrichtungen in Öffnungs- und Schließrichtung bewegbar sind.

### Figurenbeschreibung

Weitere Merkmale und Vorteile der Erfindung sind anhand einer in den Figuren schematisiert dargestellten Ausführungsbeispielen näher erläutert.

Im Einzelnen zeigt:
- Figur 1: ein Möbel perspektivisch von schräg oben mit einer Schublade im vollständig geöffneten Zustand an einem Möbelkorpus, wobei die Schublade durch eine erfindungsgemäße Vorrichtung in Öffnungs- und Schließrichtung bewegbar ist,
- Figur 2: eine stark schematische Schnittdarstellung eines Teils einer Schublade und einer Vorrichtung ohne Wälzkörper gemäß Fig. 1,
- Figur 3: eine Seitenansicht auf eine Schublade mit montierter Vorrichtung gemäß Fig. 2 im geschlossenen Zustand der Schublade,
- Figur 4: eine Seitenansicht auf eine Schublade mit montierter Vorrichtung gemäß Fig. 3 im geöffneten Zustand der Schublade,
- Figur 5: eine stark schematische Schnittdarstellung eines Teils einer Schublade und einer alternativen Vorrichtung ohne Wälzkörper gemäß Fig. 1,
- Figur 6: eine Seitenansicht auf eine Schublade mit montierter Vorrichtung gemäß Fig. 5 im geschlossenen Zustand der Schublade,
- Figur 7: eine Seitenansicht auf eine Schublade mit montierter Vorrichtung gemäß Fig. 6 im geöffneten Zustand der Schublade.

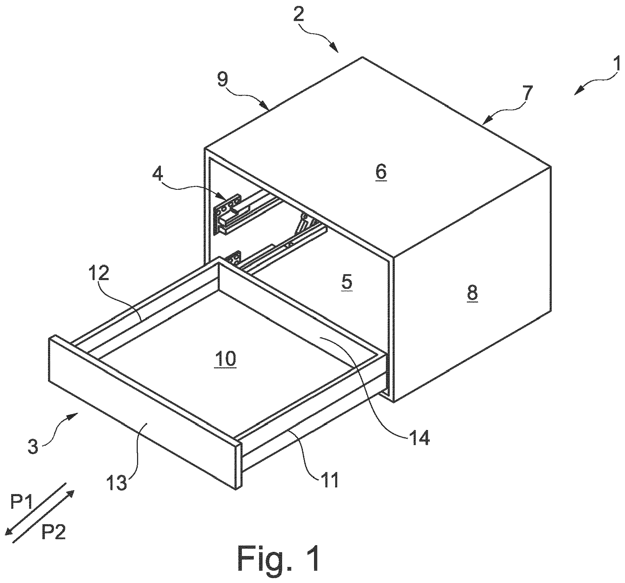

In der Figur 1 ist ein Möbel 1 mit einem Möbelkorpus 2 und einer relativ zum Möbelkorpus 2 beweglichen Möbelteils 3, welches als

Schublade ausgebildet ist, dargestellt. Das bewegliche Möbelteil 3 ist mittels der erfindungsgemäßen Vorrichtung 4, wie z.B. einer Schubladenausziehführung, relativ zum Möbelkorpus 2 in Öffnungsrichtung P1 und Schließrichtung P2 bewegbar. Der Möbelkorpus 2 weist einen Boden 5, einen Oberboden 6, eine Rückwand 7 und zwei Seitenwände 8, 9 auf. Das bewegliche Möbelteil 3 weist vorzugsweise einen Schubladenboden 10, Schubladenseitenwände 11, 12, eine Schubladenfront 13 und eine Schubladenrückwand 14 auf. Weiter kann das bewegliche Möbelteil 3 auch eine Seitenzarge 16 aufweisen.

Die Vorrichtung 4 ist vorzugsweise an den Seitenwänden 8, 9 des Möbelkorpus 2 befestigt. Bevorzugterweise weist die Vorrichtung 4, die hier beispielsweise als Vollauzug gestaltet ist, eine Korpusschiene 15 auf, wobei die Korpusschiene 15 an der Seitenwand 8, 9 des Möbelkorpus 2 montiert ist. Vorzugsweise weist die Korpusschiene 15 für die Anbringung an die Seitenwand 8,9 des Möbelkorpus 2 eine Befestigungsplatte 17 auf, wobei die Befestigungsplatte 17 mittels Befestigungsmittel, wie z.B. Schrauben, an der Seitenwand 8, 9 montierbar ist. Vorteilhafterweise ist an jeder Seitenwand 8, 9 des Möbelkorpus 2 eine Korpusschiene 15 angebracht, wobei die Korpusschienen 15 vorzugsweise spiegelsymmetrisch an den Seitenwänden 8, 9 des Möbelkorpus 2 angebracht sind.

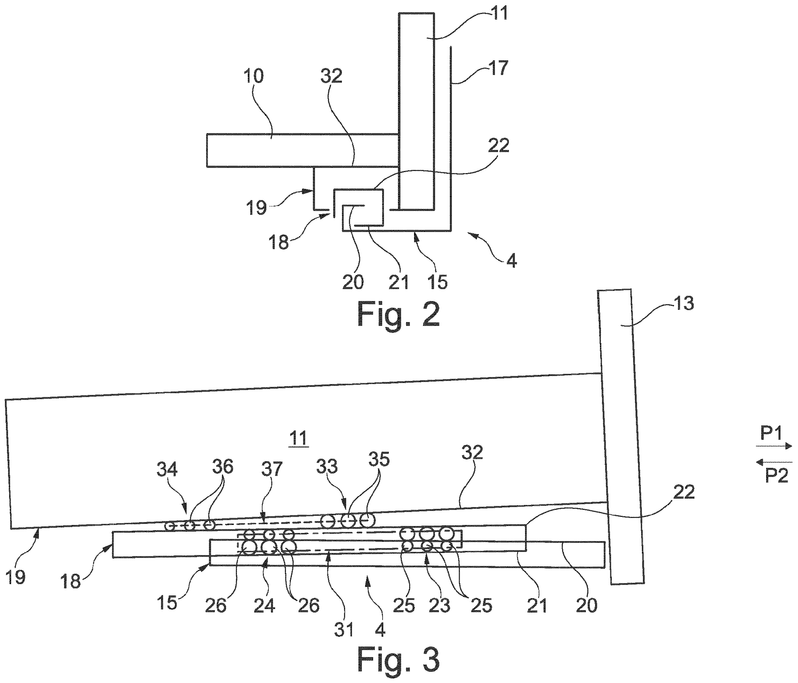

Die Vorrichtung 4 in den Figuren 2 bis 7 ist als Vollauszug ausgestaltet und weist vorzugsweise zwei bewegliche Schienen auf, wobei vorzugsweise eine bewegliche Schiene als Mittelschiene 18 und eine bewegliche Schiene als Schubladenschiene 19 ausgestaltet ist. Die Mittelschiene 18 ist bevorzugterweise zwischen der Korpusschiene 15 und der Schubladenschiene 19 angeordnet, wobei die Mittelschiene 18 und Schubladenschiene 19 relativ zur Korpusschiene 15 bewegbar sind. Die Schubladenschiene 19 ist vorzugsweise relativ zur Mittelschiene 18 in Öffnungsrichtung P1 und Schließrichtung P2 bewegbar.

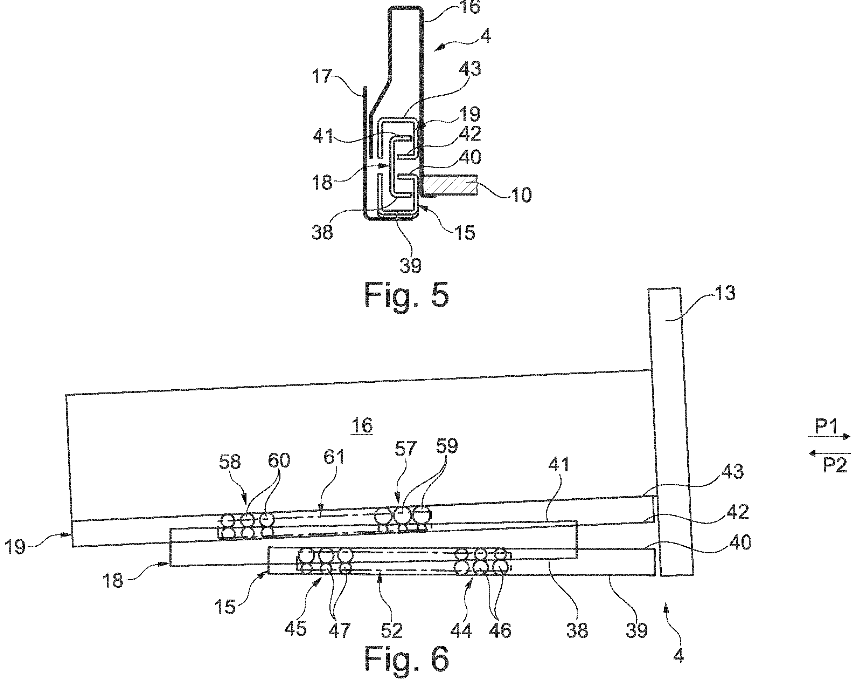

Die Vorrichtung 4 bzw. die Schubladenschiene 19 der Vorrichtung 4 ist vorzugsweise mit einer Unterseite des Schubladenbodens 10 und/oder einer Unterseite der Schubladenseitenwand 11, 12 oder Seitenfläche der Schubladenseitenwand 11, 12 verbunden (s. Fig. 2). Weiter ist vorstellbar, dass die Vorrichtung 4 in einem Hohlraum einer Seitenzarge 16 aufgenommen ist, wobei beispielweise die Schubladenschiene 19 mit der Seitenzarge 16 verbunden ist (s. Fig. 5).

In den Figuren 2 bis 4 ist eine erste Variante der erfindungsgemäßen Vorrichtung 4 dargestellt, wobei ein Laufsteg 20 der Korpusschiene 15 zwischen zwei Laufstegen 21, 22 der Mittelschiene 18 angeordnet ist. Der Laufsteg 20 der Korpusschiene 15 ist vorzugsweise im montierten Zustand am Möbel 1 horizontal und die beiden Laufstege 21, 22 der Mittelschiene 18 schräg relativ zum horizontal ausgerichteten Laufsteg 20 der Korpusschiene 15 ausgerichtet. Die Schrägstellung der Laufstege 21, 22 der Mittelschiene 18 wird erreicht, in dem zwischen den Laufstegen 21, 22 der Mittelschiene 18 und dem Laufsteg 20 der Korpusschiene 15 Wälzkörper mit unterschiedlichen Durchmesser angeordnet sind.

Bevorzugterweise sind zwischen dem Laufsteg 20 der Korpusschiene 15 und einem unteren Laufsteg 21 der Mittelschiene 18 zwei Wälzkörperreihen 23, 24 angeordnet. Die Wälzkörperreihen 23, 24 weisen vorzugsweise jeweils gleichartige Wälzkörper 25, 26 auf, wobei die Wälzkörper 23 in einer Wälzkörperreihe 25 die gleichen Durchmesser aufweisen. Auch zwischen dem Laufsteg 20 der Korpusschiene 15 und einem oberen Laufsteg 22 der Mittelschiene 18 sind vorzugsweise zwei Wälzkörperreihen 27, 28 mit Wälzkörpern 29, 30 angeordnet. Um eine Schrägstellung der Laufstege 21, 22 der Mittelschiene 18 zu erhalten, weisen vorteilhafterweise die Wälzkörper 25 einer Wälzkörperreihe 23, welche in Öffnungsrichtung P1 vorne angeordnet sind einen kleineren Durchmesser auf, als die Wälzkörper 26 einer Wälzkörperreihe 24, welche hinten angeordnet sind, bei den zwei Wälzkörperreihen 23, 24, welche zwischen den unteren Laufsteg 21 der Mittelschiene 18 und dem Laufsteg 20 der Korpusschiene 15 angeordnet sind. Bei den beiden Wälzkörperreihen 27, 28, bei welchem die Wälzkörper 29, 30 zwischen einem oberen Laufsteg 22 der Mittelschiene 18 und dem Laufsteg 20 der Korpusschiene 15 angeordnet sind, weisen vorteilhafterweise die Wälzkörper 29 einer Wälzkörperreihe 27, welche in Öffnungsrichtung P1 vorne angeordnet sind einen größeren Durchmesser auf, als die Wälzkörper 30 einer Wälzkörperreihe 28, welche hinten angeordnet sind.

Die vier Wälzkörperreihen 23, 24, 27, 28 sind bevorzugterweise an einem Wälzkörperwagen 31 angeordnet. Weiter ist vorstellbar, dass zwei Wälzkörperreihen 23, 27 an einem ersten Wälzkörperwagen und die anderen beiden Wälzkörperreihen 24, 28 an einem zweiten Wälzkörperwagen angeordnet sind.

Vorteilhafterweise weisen die Wälzkörper 25, 26, 29, 30 alle unterschiedliche Durchmesser auf, wobei die Wälzkörper einer dazugehörigen Wälzkörperreihe den gleichen Durchmesser aufweisen.

Bevorzugterweise ist oberhalb des oberen Laufstegs 22 der Mittelschiene 18 ein Laufsteg 32 der Schubladenschiene 19 angeordnet. Weiter ist bevorzugt, dass zwischen dem Laufsteg 32 der Schubladenschiene 19 und dem oberen Laufsteg 22 der Mittelschiene 18 zwei Wälzkörperreihen 33, 34 mit Wälzkörpern 35, 36 angeordnet sind, wobei die Wälzkörper 35 einer Wälzkörperreihe 33, welche in Öffnungsrichtung P1 vorne liegen einen größeren Durchmesser aufweisen als die Wälzkörper 36 einer Wälzkörperreihe 34, welche weiter hinten angeordnet sind. Die Wälzkörperreihen 33, 34 sind vorzugsweise an einem weiteren Wälzkörperwagen 37 angeordnet. Beispielsweise kann die Bewegung der Wälzkörperwagen 31, 37 miteinander synchronisiert werden, so dass bei der Öffnungsbewegung des bewegliche Möbelteils 3 in Öffnungsrichtung P1, sowohl die Mittelschiene 18 als auch die Schubladenschiene 19 in Öffnungsrichtung P1 gleichzeitig bewegt werden.

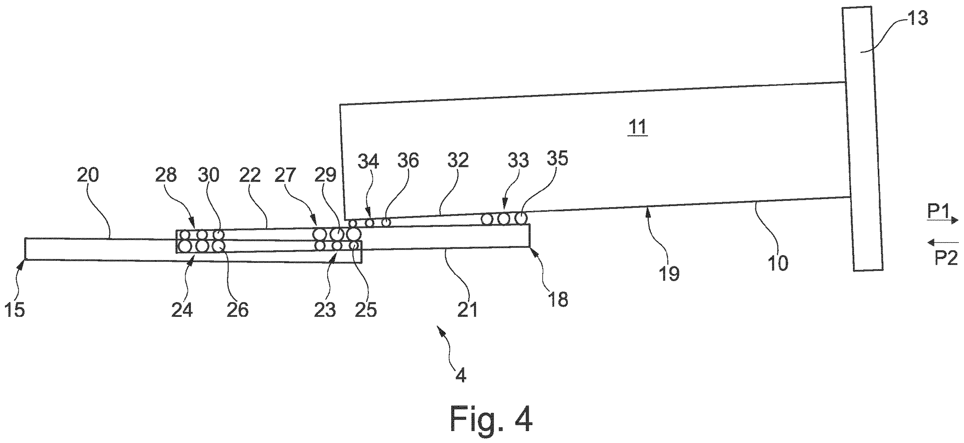

Durch die Ausgestaltung bzw. die unterschiedlichen Durchmesser der Wälzkörper 25, 26, 29, 30, 35, 36 sind die Laufstege 21, 22 der Mittelschiene 18 und der Laufsteg 32 der Schubladenschiene 19 schon im geschlossen Zustand der Schublade schräg relativ zum horizontal ausgerichteten Laufsteg 20 der Korpusschiene 15 ausgerichtet (s. Fig. 3). Weiter ist vorzugsweise der Laufsteg 32 der Schubladenschiene 19, auf welchem vorzugsweise das bewegliche Möbelteil 3 aufliegt, schräg relativ zum oberen Laufsteg 22 der Mittelschiene 18 ausgerichtet. Bei der Öffnung des bewegliche Möbelteils 3 in Öffnungsrichtung, wird diese Schrägstellung der Laufstege 21, 22 der Mittelschiene 18 und dem Laufsteg 32 der Schubladenschiene 19 nicht verändert (s. Fig. 4). Somit wird erreicht, dass eine Absenkung des bewegliche Möbelteils 3 verhindert wird, denn das Gewicht des schweren bewegliche Möbelteils 3 wirkt vor allem im geöffneten Zustand des bewegliche Möbelteils 3 auf die Schubladenschiene 19, wodurch die Schrägstellung des Laufstegs 32 der Schubladenschiene 19 durch das Gewicht des bewegliche Möbelteils 3 ausgeglichen wird.

Eine weitere Variante der Vorrichtung 4 ist in den Figuren 5 bis 7 gezeigt, dabei ist ein unterer Laufsteg 38 der Mittelschiene 18 zwischen genau zwei horizontal ausgerichteten Laufstegen 39, 40 der Korpusschiene 15 und ein oberer Laufsteg 41 der Mittelschiene 18 zwischen genau zwei Laufstegen 42, 43 der Schubladenschiene 19 angeordnet.

Bevorzugterweise sind zwischen dem untern Laufsteg 38 der Mittelschiene 18 und dem unteren Laufsteg 29 der Korpusschiene 15 zwei Wälzkörperreihen 44, 45 angeordnet, die Wälzkörperreihen 44, 45 weisen vorzugsweise jeweils gleichartige Wälzkörper 46, 47 auf. Auch zwischen dem unteren Laufsteg 38 der Mittelschiene 18 und dem oberen Laufsteg 40 der Korpusschiene 15 sind vorzugsweise zwei Wälzkörperreihen 48, 49 mit Wälzkörpern 50, 51 angeordnet. Um eine Schrägstellung des Laufstegs 38 der Mittelschiene 18 zu erhalten, weisen vorteilhafterweise die Wälzkörper 46 der Wälzkörperreihe 44, welche in Öffnungsrichtung P1 vorne angeordnet sind einen größeren Durchmesser auf, als die Wälzkörper 47 der Wälzkörperreihe 45, welche hinten angeordnet sind, bei den zwei Wälzkörperreihen 44, 45, welche zwischen dem unteren Laufsteg 38 der Mittelschiene 18 und dem unteren Laufsteg 39 der Korpusschiene 15 angeordnet sind. Bei den beiden Wälzkörperreihen 48, 49, bei welchem die Wälzkörper 50, 51 zwischen einem oberen Laufsteg 40 der Korpusschiene 15 und dem unteren Laufsteg 38 der Mittelschiene 18 angeordnet sind, weisen vorteilhafterweise die Wälzkörper 50 einer Wälzkörperreihe 48, welche in Öffnungsrichtung P1 vorne angeordnet sind einen kleineren Durchmesser auf, als die Wälzkörper 51 einer Wälzkörperreihe 49, welche hinten angeordnet sind.

Die vier Wälzkörperreihen 44, 45, 48, 49 sind bevorzugterweise an einem Wälzkörperwage 52 angeordnet.

Zwischen dem oberen Laufsteg 41 der Mittelschiene 18 und dem unteren Laufsteg 42 der Schubladenschiene 19 sind bevorzugterweise zwei Wälzkörperreihen 53, 54 angeordnet, die Wälzkörperreihen 53, 54 weisen vorzugsweise jeweils gleichartige Wälzkörper 55, 56 auf. Auch zwischen dem oberen Laufsteg 41 der Mittelschiene 18 und dem oberen Laufsteg 43 der Schubladenschiene 19 sind vorzugsweise zwei Wälzkörperreihen 57, 58 mit Wälzkörpern 59, 60 angeordnet. Die Wälzkörper 55 der Wälzkörperreihe 53, welche in Öffnungsrichtung P1 vorne angeordnet sind weisen vorteilhafterweise einen kleineren Durchmesser auf, als die Wälzkörper 56 der Wälzkörperreihe 54, welche hinten angeordnet sind, bei den zwei Wälzkörperreihen 53, 54, welche zwischen dem oberen Laufsteg 41 der Mittelschiene 18 und dem unteren Laufsteg 42 der Schubladenschiene 19 angeordnet sind. Bei den beiden Wälzkörperreihen 57, 58, bei welchem die Wälzkörper 59, 60 zwischen einem oberen Laufsteg 41 der Mittelschiene 18 und dem oberen Laufsteg 43 der Schubladenschiene 19 angeordnet sind, weisen vorteilhafterweise die Wälzkörper 59 einer Wälzkörperreihe 57, welche in Öffnungsrichtung P1 vorne angeordnet sind einen größeren Durchmesser auf, als die Wälzkörper 60 einer Wälzkörperreihe 58, welche hinten angeordnet sind.

Die vier Wälzkörperreihen 53, 54, 57, 58 sind bevorzugterweise an einem Wälzkörperwagen 61 angeordnet. Beispielsweise kann die Bewegung der Wälzkörperwagen 52, 61 miteinander synchronisiert werden, so dass bei der Öffnungsbewegung des bewegliche Möbelteils 3 in Öffnungsrichtung P1, sowohl die Mittelschiene 18 als auch die Schubladenschiene 19 in Öffnungsrichtung P1 gleichzeitig bewegt werden.

Durch die Ausgestaltung bzw. die unterschiedlichen Durchmesser der Wälzkörper 46, 47, 50, 51, 55, 56, 59, 60 sind die Laufstege 38, 41 der Mittelschiene 18 und die Laufstege 42, 43 der Schubladenschiene 19 schon im geschlossen Zustand der Schublade schräg relativ zu den Laufstegen 39, 40 der Korpusschiene 15 ausgerichtet (s. Fig. 6).

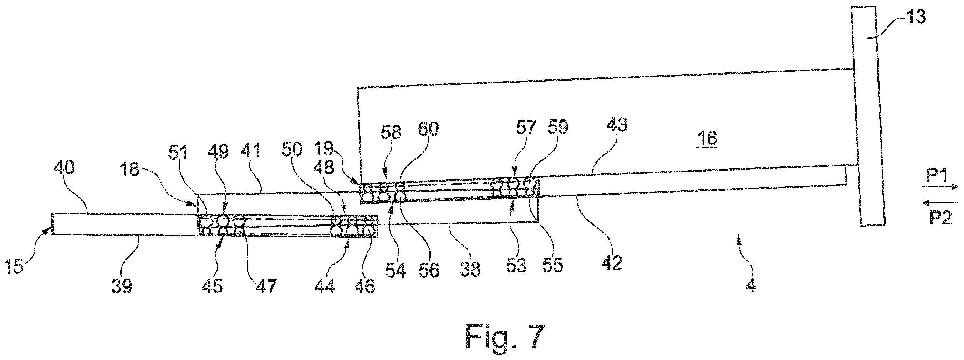

Weiter sind vorzugsweise die Laufstege 42, 43 der Schubladenschiene 19 schräg relativ zu den Laufstegen 38, 41 der Mittelschiene 18 ausgerichtet. Bei der Öffnung des bewegliche Möbelteils 3 in Öffnungsrichtung P1 wird diese Schrägstellung der Laufstege 38, 41 der Mittelschiene 18 und der Laufstege 42, 43 der Schubladenschiene 19 nicht verändert (s. Fig. 7). Somit wird erreicht, dass eine Absenkung des bewegliche Möbelteils 3 verhindert wird, denn das Gewicht des schweren bewegliche Möbelteils 3 wirkt vor allem im geöffneten Zustand des bewegliche Möbelteils 3 auf die Schubladenschiene 19, wodurch die Schrägstellung des Laufstegs 42, 43 der Schubladenschiene 19 durch das Gewicht des bewegliche Möbelteils 3 ausgeglichen wird.

### Bezugszeichenliste

- 1: Möbel
- 2: Möbelkorpus
- 3: Möbelteil
- 4: Vorrichtung
- 5: Boden
- 6: Oberboden
- 7: Rückwand
- 8: Seitenwand
- 9: Seitenwand
- 10: Schubladenboden
- 11: Schubladenseitenwand
- 12: Schubladenseitenwand
- 13: Schubladenfront
- 14: Schubladenrückwand
- 15: Korpusschiene
- 16: Seitenzarge
- 17: Befestigungsplatte
- 18: Mittelschiene
- 19: Schubladenschiene
- 20: Laufsteg
- 21: Laufsteg
- 22: Laufsteg
- 23: Wälzkörperreihe
- 24: Wälzkörperreihe
- 25: Wälzkörper
- 26: Wälzkörper
- 27: Wälzkörperreihe
- 28: Wälzkörperreihe
- 29: Wälzkörper
- 30: Wälzkörper
- 31: Wälzkörperwagen

- 32: Laufsteg
- 33: Wälzkörperreihe
- 34: Wälzkörperreihe
- 35: Wälzkörper
- 36: Wälzkörper
- 37: Wälzkörperwagen
- 38: Laufsteg
- 39: Laufsteg
- 40: Laufsteg
- 41: Laufsteg
- 42: Laufsteg
- 43: Laufsteg
- 44: Wälzkörperreihe
- 45: Wälzkörperreihe
- 46: Wälzkörper
- 47: Wälzkörper
- 48: Wälzkörperreihe
- 49: Wälzkörperreihe
- 50: Wälzkörper
- 51: Wälzkörper
- 52: Wälzkörperwagen
- 53: Wälzkörperreihe
- 54: Wälzkörperreihe
- 55: Wälzkörper
- 56: Wälzkörper
- 57: Wälzkörperreihe
- 58: Wälzkörperreihe
- 59: Wälzkörper
- 60: Wälzkörper
- 61: Wälzkörperwagen

## Patentansprüche

1. Vorrichtung (4) zur Führung eines beweglichen Möbelteils (3), insbesondere eine Schublade, wobei das bewegliche Möbelteil (3) mittels der Vorrichtung (4) verschieblich an einem Möbelkorpus (2) aufnehmbar ist, wobei die Vorrichtung (4) eine Korpusschiene (15), und eine bewegliche Schiene umfasst, wobei die Korpusschiene (15) am Möbelkorpus (2) anordenbar ist, wobei die verschieblich gelagerte bewegliche Schiene relativ zur Korpusschiene (15) in Öffnung- und Schließrichtung beweglich ist, wobei die Korpusschiene (15) und die bewegliche Schiene jeweils einen ebenen Laufsteg (20, 21, 22, 32, 38, 39, 40, 41, 42, 43) aufweisen, wobei lastübertragende Wälzkörper (25, 26, 29, 30, 35, 36, 46, 47, 50, 51, 55, 56, 59, 60) jeweils zwischen einem Laufsteg (20, 39, 40) der Korpusschiene (15) und einem Laufsteg (21, 22, 38) der beweglichen Schiene angeordnet sind, wobei bei der Relativbewegung zwischen der beweglichen Schiene und der Korpusschiene (15) die lastübertragenden Wälzkörper (25, 26, 29, 30, 46, 47, 50, 51) entlang der Laufstege (20, 21, 22, 38, 39, 40) der Korpusschiene (15) und der beweglichen Schiene bewegbar sind, **dadurch gekennzeichnet, dass** der Laufsteg (20, 39, 40) der Korpusschiene (15) und der Laufsteg (21, 22, 32, 38, 41, 42, 43) der beweglichen Schiene ununterbrochen ist, wobei die Wälzkörper (25, 26, 29, 30, 46, 47, 50, 51) zwischen der Korpusschiene (15) und der beweglichen Schiene derart ausgestaltet sind, dass im montierten Zustand der Laufsteg (21, 22, 38, 41) der beweglichen Schiene immer schräg relativ zum horizontal ausgerichteten Laufsteg (20, 39, 40) der Korpusschiene (15) ausgerichtet ist.

2. Vorrichtung nach Anspruch 1, **dadurch gekennzeichnet, dass** ein Wälzkörperwagen (31, 37, 52, 61) Wälzkörperreihen (23, 24, 27, 28, 33, 34, 44, 45, 48, 49, 53, 54, 57, 58) mit jeweils mehreren Wälzkörpern (25, 26, 29, 30, 35, 36, 46, 47, 50, 51, 55, 56, 59, 60) aufweist.

3. Vorrichtung nach einem der vorangegangenen Ansprüche, **dadurch gekennzeichnet, dass** der Durchmesser aller Wälzkörper (25, 26, 29, 30, 35, 36, 46, 47, 50, 51, 55, 56, 59, 60) einer Wälzkörperreihe (23, 24, 27, 28, 33, 34, 44, 45, 48, 49, 53, 54, 57, 58) gleich ist.

4. Vorrichtung nach einem der vorangegangenen Ansprüche, **dadurch gekennzeichnet, dass** ein einziger Wälzkörperwagen (31) mit vier Wälzköperreihen (23, 24, 27, 28) vorhanden ist, wobei zwei Wälzkörperreihen (27, 28) zwischen dem Laufsteg (20) der Korpusschiene (15) und einem oberen Laufsteg (22) der beweglichen Schiene und zwei Wälzkörperreihen (23, 24) zwischen dem Laufsteg (20) der Korpusschiene (15) und einem unteren Laufsteg (21) der beweglichen Schiene vorhanden sind.

5. Vorrichtung nach einem der vorangegangenen Ansprüche, **dadurch gekennzeichnet, dass** ein einziger Wälzkörperwagen (52) mit vier Wälzköperreihen (44, 45, 48, 49) vorhanden ist, wobei zwei Wälzkörperreihen (48, 49) zwischen dem Laufsteg (38) der beweglichen Schiene und einem oberen Laufsteg (40) der Korpusschiene (15) und zwei Wälzkörperreihen (44, 45) zwischen dem Laufsteg (38) der beweglichen Schiene und einem unteren Laufsteg (39) der Korpusschiene (15) vorhanden sind.

6. Vorrichtung nach einem der vorangegangenen Ansprüche, **dadurch gekennzeichnet, dass** zwei Wälzkörperwagen mit jeweils zwei Wälzkörperreihen vorhanden sind.

7. Vorrichtung nach Anspruch 4, **dadurch gekennzeichnet, dass** die Wälzkörper (25, 26, 29, 30) zweier Wälzkörperreihen (23, 24, 27, 28) jeweils unterschiedliche Durchmesser aufweisen, wobei eine Wälzkörperreihe (27, 28) zwischen dem Laufsteg (20) der Korpusschiene (15) und dem oberen Laufsteg (22) der beweglichen Schiene und eine Wälzkörperreihe (23, 24) zwischen dem Laufsteg (20) der Korpusschiene (15) und dem unteren Laufsteg (21) der beweglichen Schiene angeordnet sind.

8. Vorrichtung nach Anspruch 5, **dadurch gekennzeichnet, dass** die Wälzkörper (46, 47, 50, 51) zweier Wälzkörperreihen (44, 45, 48, 49) jeweils unterschiedliche Durchmesser aufweisen, wobei eine Wälzkörperreihe (48, 49) zwischen dem Laufsteg (38) der beweglichen Schiene und dem oberen Laufsteg (40) der Korpusschiene (15) und eine Wälzkörperreihe (44, 45) zwischen dem Laufsteg (38) der beweglichen Schiene und dem unteren Laufsteg (39) der Korpusschiene (15) angeordnet sind.

9. Vorrichtung nach einem der vorangegangenen Ansprüche, **dadurch gekennzeichnet, dass** der Durchmesser der Wälzkörper (25, 29, 35, 46, 50, 55, 59) der in Öffnungsrichtung vorderen Wälzkörperreihe (23, 27, 33, 44, 48, 53, 57) unterschiedlich zu dem Durchmesser der Wälzkörper (26, 30, 36,47, 51, 56, 60) der hinteren Wälzköperreihe (24, 28, 34, 45, 49, 54, 58) ist.

10. Vorrichtung nach einem der vorangegangenen Ansprüche, **dadurch gekennzeichnet, dass** die Summe der Durchmesser der Wälzkörper (25, 29) der beiden in Öffnungsrichtung vorderen Wälzkörperreihen (23, 27) gleich ist mit der Summe der Durchmesser der Wälzkörper (26, 30) der beiden hintern Wälzkörperreihen (24, 28).

11. Vorrichtung nach einem der vorangegangenen Ansprüche, **dadurch gekennzeichnet, dass** die bewegliche Schiene eine Schubladenschiene (19) ist.

12. Vorrichtung nach einem der vorangegangenen Ansprüche, **dadurch gekennzeichnet, dass** die bewegliche Schiene eine Mittelschiene (18) ist.

13. Vorrichtung nach einem der vorangegangenen Ansprüche, **dadurch gekennzeichnet, dass** die Vorrichtung zwei bewegliche Schienen aufweist, wobei eine erste bewegliche Schiene als Mittelschiene (18) und eine zweite bewegliche Schiene als Schubladenschiene (19) ausgebildet ist.

14. Vorrichtung nach einem der vorangegangenen Ansprüche, **dadurch gekennzeichnet, dass** zwischen einem Laufsteg (32, 42, 43) der Schubladenschiene (19) und einem Laufsteg (22, 41) der Mittelschiene (18) zwei Wälzkörperreihen (33, 34, 53, 54, 57, 58) angeordnet sind, wobei die Wälzkörper (35, 55, 59) einer Wälzkörperreihe (33, 53, 57) einen anderen Durchmesser aufweisen als die Wälzkörper (36, 56, 60) der anderen Wälzkörperreihe (34, 54, 58).

15. Möbel (1) mit einem beweglichen Möbelteil (3) und einen Möbelkorpus(2), wobei das bewegliche Möbelteil (3) relativ zum Möbelkorpus (2) geführt in Öffnungs- und Schließrichtung durch eine Vorrichtung (4) nach einem der vorangegangenen Ansprüchen bewegbar ist.
